# EUROPEAN PATENT APPLICATION

(11) **EP 1 688 653 A1**
(43) Date of publication of application: **09.08.2006**
(21) Application number: 06101222.5
(22) Date of filing: 02.02.2006
(51) Int. Cl.: F16K 11/07, F16K 37/00

(54) **Valve spool position sensor**

(30) Priority: 08.02.2005 US 53471
(71) Applicant: Deere & Company, Moline IL 61265-8098 (US)
(72) Inventor: Caruso, Robert L., Cedar Falls, IA Iowa 50613 (US)
(74) Representative: Bradl, Joachim

(57) **Abstract**

A hydraulic valve (10) includes a housing (12) having a valve bore (14) therein. A sensor bore (16) intersects the valve bore (14) and extends generally transverse with respect to the valve bore (14). A valve spool (18) is movable axially in the valve bore (14). The spool (18) has a sensing surface (21) which extends at an angle with respect to a central axis of the spool (18) and which is exposed to the sensor bore (16). A proximity sensor (30) is mounted in the sensor bore (16) to sense a distance between the sensor (30) and the sensing surface (21), and to generate a signal representing an axial position of the valve spool (18) relative to the housing (12).

## Description

The present invention relates to a valve spool position sensor for a hydraulic valve.

Hydraulic valves, such as a pressure control valve, have valve spools which slide axially with a valve bore in a housing. It is known to sense the position of a spool valve with a proximity sensor, such as described in US 4,907,615 and 6,789,570. However, in both of the systems described in these patents the proximity sensor projects away from an axial end of the valve spool, thus increasing the axial dimension of the assembly. Also, both systems include an intermediate part located between the valve spool and the sensor.

Accordingly, it is an object of this invention to overcome the drawbacks known from the prior art. Especially, it is an object to provide a compact valve spool position sensing system. In particular, a valve spool position sensing system shall be provided which does not require intermediate parts between the sensor and the valve spool.

These and other objects are achieved by the present invention, wherein a hydraulic valve includes a housing having a valve bore therein. A sensor bore intersects the valve bore and extends generally transverse with respect to the valve bore. A valve spool is movable axially in the valve bore. The spool has a sensing surface which extends at an angle with respect to a central axis of the spool and which is exposed to the sensor bore. A proximity sensor is mounted in the sensor bore to sense a distance between the sensor and the sensing surface, and to generate a signal representing an axial position of the valve spool relative to the housing.

The spool could include a sensing section which has a diameter which decreases from a larger diameter end to a smaller diameter end.

The sensing surface being preferably formed by a portion of the sensing section.

The sensing section might be at an end of the valve spool.

The sensing section could be exposed to the sensor bore.

In a preferred embodiment, the proximity sensor having a sensor end spaced apart from and facing towards the sensing section of the valve spool, the sensor sensing a distance between the sensor end and a surface of the sensing section and generating a signal representing an axial position of the valve spool relative to the housing.

The sensing section might form a sensing surface which extends at an angle with respect to a central axis of the spool.

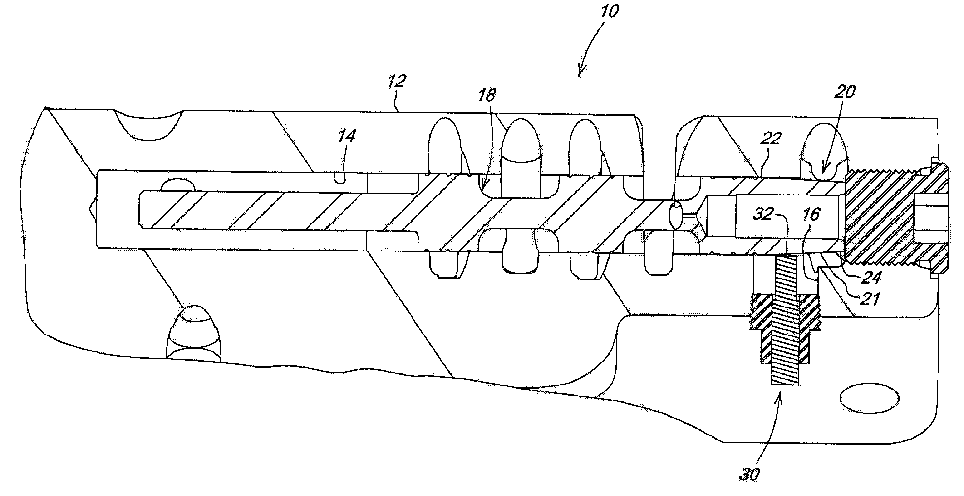

For a complete understanding of the objects, techniques, and structure of the invention reference should be made to the following detailed description and accompanying drawing, wherein the sole Figure is a sectional view of a hydraulic valve with a spool position sensor according to the present invention.

Referring to the Figure, hydraulic valve 10 includes a valve housing 12 with a valve bore 14 and a sensor bore 16 which intersects the valve bore 14 and extends generally transverse with respect to the valve bore 14. A valve spool 18 is movable axially in the valve bore 14. The spool 18 has a sensing section 20 near an end thereof which is exposed to the sensor bore 16. The sensing section 20 tapers uniformly from a larger diameter inner end 22 to a smaller diameter outer end 24. The sensing section 20 forms a sensing surface 21 which extends at an angle with respect to a central axis of the spool, and which is exposed to the sensor bore 16. Preferably, the spool 18 or at least the sensing section 20 is made of a magnetic material

A proximity sensor 30 is mounted in the sensor bore 16. The sensor is preferably a non-contacting eddy current proximity probe capable of 1.3 mm sensing range, such as made by Kaman. Such a sensor detects a change in magnetic flux due to the interference caused by the proximity of a target material (usually magnetic). The sensor 30 has a sensor end 32 spaced apart from and facing towards the sensing surface 21. The sensor 30 senses the distance between the sensor end 32 and the sensing surface 21. Since this distance varies as a function of the axial position of the spool 18, the sensor 30 generates a signal representing an axial position of the valve spool 18 relative to the housing 12.

While the present invention has been described in conjunction with a specific embodiment, it is understood that many alternatives, modifications and variations will be apparent to those skilled in the art in light of the foregoing description. Accordingly, this invention is intended to embrace all such alternatives, modifications and variations which fall within the scope of the appended claims.

## Claims

1. Hydraulic valve, comprising:
a housing (12) having a valve bore (14) therein, and a sensor bore (16) intersecting the valve bore (14) and extending generally transverse with respect to the valve bore (14);
a valve spool (18) movable axially in the valve bore (14), the spool (18) having a sensing surface (21) which extends at an angle with respect to a central axis of the spool (18), said sensing surface (21) being exposed to the sensor bore (16); and
a proximity sensor (30) mounted in the sensor bore (16), the sensor (30) having a sensor end (32) spaced apart from and facing towards the sensing surface (21), the sensor (30) sensing a distance between the sensor end (32) and the sensing surface (21) and generating a signal representing an axial position of the valve spool (18) relative to the housing (12).

2. Hydraulic valve of claim 1, wherein:
the spool (18) includes a sensing section (20) which has a diameter which decreases from a larger diameter end (22) to a smaller diameter end (24).

3. Hydraulic valve of claim 2, wherein:
the sensing surface (21) being formed by a portion of the sensing section (20).

4. Hydraulic valve of claim 2 or 3, wherein:
the sensing section (20) is at an end of the valve spool (18).

5. Hydraulic valve according to one of the claims 2 to 4, wherein:
the sensing section (20) being exposed to the sensor bore (16).

6. Hydraulic valve according to one of the claims 2 to 5, wherein:
the proximity sensor (30) having a sensor end (32) spaced apart from and facing towards the sensing section (20) of the valve spool (18), the sensor (30) sensing a distance between the sensor end (32) and a surface (21) of the sensing section (20) and generating a signal representing an axial position of the valve spool (18) relative to the housing (12).

7. The hydraulic valve according to one of the claims 2 to 6, wherein:
the sensing section (20) forms a sensing surface (21) which extends at an angle with respect to a central axis of the spool (18).
